# EUROPÄISCHE PATENTANMELDUNG

(11) **EP 4 745 903 A1**
(43) Veröffentlichungstag der Anmeldung: **20.05.2026**
(21) Anmeldenummer: 24213297.5
(22) Anmeldetag: 15.11.2024
(51) Int. Cl.: G06V 10/24, G06V 10/80, G06V 10/82

(54) **SYSTEM ZUR ÜBERPRÜFUNG VON OBJEKTEN**

(71) Anmelder: SICK AG, 79183 Waldkirch (DE)
(72) Erfinder: Kempermann, Govinda, 79261 Gutach (DE); Baak, Josef, 79183 Waldkirch (DE); Gerber, Jan, 79350 Sexau (DE)
(74) Vertreter: Manitz Finsterwald Patent- und Rechtsanwaltspartnerschaft mbB

(57) **Zusammenfassung**

Die Erfindung bezieht sich auf System zur Überprüfung von Objekten, insbesondere Förderobjekten, umfassend: zumindest ein Kameramodul zur Erfassung eines Objekts und ein Auswertungsmodul, wobei das Kameramodul einen, insbesondere lichtlaufzeitbasierten, 3D-Bildsensor zur Erzeugung von 3D-Bilddaten und eine 2D-Kamera zur Erzeugung von 2D-Bilddaten umfasst, wobei das Kameramodul ausgebildet ist, die 3D-Bilddaten und die 2D-Bilddaten an das Auswertungsmodul zu übertragen, wobei das Auswertungsmodul ausgebildet ist, basierend auf den 3D-Bilddaten und den 2D-Bilddaten ein durch das Kameramodul erfasstes Objekt zu klassifizieren.

## Beschreibung

Die Erfindung bezieht sich auf ein System und ein Verfahren zur Überprüfung von Objekten.

Die Überprüfung von Objekten ist in vielen industriellen Bereichen, wie beispielsweise in der Logistik oder bei der Kontrolle von Flughafengepäck, essenziell, um fehlerhafte oder gefährliche Objekte zu detektieren. Eine solche Überprüfung findet in der Regel durch entsprechendes Personal statt. Beispielsweise kontrolliert eine entsprechende Fachkraft an einem Flughafenförderband die über das Förderband laufenden Gepäckstücke, um nicht förderbare Gegenstände oder Sondergepäck zu identifizieren und auszusortieren.

Ein Problem bei der Überprüfung der Förderobjekte besteht jedoch darin, dass die Geschwindigkeit sowie die Zuverlässigkeit der Überprüfung von der überprüfenden Person abhängen. Somit kann es zu längeren Stillstandzeiten des Förderbands als nötig kommen. Außerdem können fehlerhafte oder gefährliche Objekte aufgrund menschlichen Versagens unerfasst bleiben.

Es kann somit als eine Aufgabe der Erfindung angesehen werden, ein System sowie ein Verfahren zur Überprüfung von Objekten bereitzustellen.

Diese Aufgabe wird durch den Gegenstand des Anspruchs 1 sowie durch den Gegenstand des Anspruchs 15 gelöst.

Ein erster Aspekt der Erfindung bezieht sich auf ein System zur Überprüfung von Objekten, insbesondere Förderobjekten, umfassend:
zumindest ein Kameramodul zur Erfassung eines Objekts und ein Auswertungsmodul, wobei das Kameramodul einen, insbesondere lichtlaufzeitbasierten, 3D-Bildsensor zur Erzeugung von 3D-Bilddaten und eine 2D-Kamera zur Erzeugung von 2D-Bilddaten umfasst,
wobei das Kameramodul ausgebildet ist, die 3D-Bilddaten und die 2D-Bilddaten an das Auswertungsmodul zu übertragen,
wobei das Auswertungsmodul ausgebildet ist, basierend auf den 3D-Bilddaten und den 2D-Bilddaten ein durch das Kameramodul erfasstes Objekt zu klassifizieren.

Das Auswertungsmodul kann basierend auf dem Klassifikationsergebnis ein Steuersignal ausgegeben, insbesondere wobei in Reaktion auf das Steuersignal eine Aktion, z.B. eine Sicherheitsaktion, ausgelöst wird. Beispielsweise kann im Falle einer Förderbandkontrolle das Förderband in Reaktion auf die Erfassung eines Objekts einer bestimmten, z.B. potenziell gefährlichen, Klasse gestoppt werden, um das Objekt von dem Förderband zu entfernen oder um eine genauere Kontrolle des Objekts durch entsprechendes Personal zu ermöglichen. Somit kann das Auswertungsmodul auch als ein Steuer- und Auswertungsmodul ausgebildet sein.

Erfindungsgemäß erfolgt die Überprüfung der Objekte somit durch ein hierfür vorgesehenes System, insbesondere automatisch. Das System kann dabei insbesondere so ausgebildet sein, dass kein menschliches Eingreifen notwendig ist und die Erkennung, Klassifizierung und/oder eine durch das Steuersignal indizierte Aktion vollständig maschinell abläuft. Ein besonderer Vorteil der Erfindung liegt darin, dass die Erfassung der Objekte mittels einer kompakten Kamera erfolgt, welche sowohl einen 3D-Bildsensor als auch eine 2D-Kamera in einem einzigen Bauteil, dem Kameramodul, vereint. Grundsätzlich kann der 3D-Bildsensor und die 2D-Kamera in unterschiedlichen Gehäusen untergebracht sein, bevorzugt sind der 3D-Bildsensor und die 2D-Kamera jedoch in demselben Gehäuse untergebracht. Folglich kann der durch das Kameramodul beanspruchte Bauraum klein gehalten werden. In vielen Fällen, wie beispielsweise bei der Einrichtung einer entsprechenden Kamera in einem Lesetunnel einer Gepäckkontrolle, ist der Bauraum ein entscheidender Faktor. Insbesondere in schwer zugänglichen Bereichen kann die Integration des Kameramoduls somit deutlich vereinfacht werden. Das System kann insbesondere ausschließlich ein Kameramodul beinhalten, um den notwendigen Bauraum zu reduzieren.

Das System ist insbesondere für den Einsatz in der Logistik, beispielsweise für die Klassifizierung von Objekten in Warenhäusern, oder für den Einsatz in Flughäfen, beispielsweise für die Klassifizierung von Förderobjekten, z.B. Fluggepäck, Sondergepäck und dergleichen, geeignet, wobei Förderobjekte beispielsweise Objekte sind, welche über ein Förderband transportiert werden. Selbstverständlich ist das erfindungsgemäße System auf einen derartigen Einsatz nicht beschränkt, sondern kann auch in anderen Bereichen Anwendung finden. Insbesondere kann das System auch in Bereichen wie CEP (Courier, Express, Parcel), Konsumgütertransport und/oder im Einzelhandel Einsatz finden. Die Klassifizierung des Objekts kann insbesondere umfassen, dass das Objekt hinsichtlich des Gewichts, der Größe, der Art, der Form, des Werts, der Lage und/oder des Zustands, insbesondere der Zerbrechlichkeit und/oder der Explosivität, klassifiziert wird. Zusätzlich oder alternativ kann das Objekt in, insbesondere nur, zwei Klassen klassifiziert werden, wobei eine Klasse einen Zustand angibt, der "in Ordnung" bzw. "förderbar" ist, und die andere Klasse einen Zustand angibt, der "nicht in Ordnung" bzw. "nicht förderbar" ist.

Ein weiterer Vorteil der Erfindung liegt darin, dass das System aufgrund seiner Einfachheit kompatibel mit bestehenden Systemen ist und dadurch auf einfache Weise in bestehende Systeme integriert werden kann.

Unter den genannten 3D-Bilddaten sind von dem 3D-Bildsensor generierte Bilddaten zu verstehen, die insbesondere eine Tiefeninformation, beispielsweise also einen Abstand eines in den Bilddaten repräsentierten Objekts zu dem 3D-Bildsensor, enthalten. Insbesondere können die 3D-Informationen bereits mittels einer Recheneinheit des Kameramoduls, z.B. mittels eines hierfür vorgesehenen ASICs (Application-Specific Integrated Circuit) wie ein ISP (Image Signal Processor), in dem Kameramodul berechnet werden. Die 3D-Informationen ermöglichen insbesondere eine genaue Bestimmung der Dimensionierung des Objekts, beispielsweise eine Bestimmung der Größe, Form und Orientierung des Objekts. Der 3D-Bildsensor umfasst insbesondere einen lichtlaufzeitbasierten Bildsensor, eine 3D-Stereokamera und/oder einen SLS-Bildsensor (Structured Light Scanning Bildsensor).

Die 2D-Bilddaten können "herkömmliche" Bilddaten sein, die ein herkömmliches fotografisches zweidimensionales Bild repräsentieren. Die 2D-Bilddaten können beispielsweise Farbinformationen, insbesondere hochauflösende 2D-RGB-Informationen, und/oder Grauwertinformationen für eine Vielzahl von Bildpixeln umfassen. Die Grauwertinformationen können beispielsweise durch eine IR-Kamera, insbesondere unter aktiver Beleuchtung, oder durch eine Umwandlung der RGB-Informationen einer RGB-Kamera in Grauwertinformationen erzeugt werden. Die Klassifizierung von Objekteigenschaften kann unter Verwendung, insbesondere ausschließlich, der Farbinformationen und/oder unter Verwendung, insbesondere ausschließlich, der Graustufeninformationen erfolgen. In manchen Fällen kann die Klassifizierung von Objekteigenschaften unter Verwendung der Farbinformationen vorteilhafter sein, z.B. bei der Segmentierung der Objekte, während in anderen Fällen die Klassifizierung von Objekteigenschaften unter Verwendung der Graustufeninformationen vorteilhafter sein kann, beispielsweise wenn der Hintergrund die gleiche Farbe wie das Objekt aufweist oder bei der Klassifizierung von Materialeigenschaften des Objekts, wobei die Graustufeninformationen beispielsweise ein IR-Graustufenbild umfassen, das mit infrarotem Licht aufgenommen wurde und in Graustufen dargestellt wird.

Die 3D-Bilddaten und/oder die 2D-Bilddaten können insbesondere drahtlos, z.B. über WLAN, 5G, Li-Fi oder Millimeterwellen-Kommunikation, oder kabelgebunden über ein entsprechendes Verbindungskabel an das Auswertungsmodul übertragen werden.

Das Auswertungsmodul kann insbesondere ausgebildet sein, die 3D-Bilddaten und die 2D-Bilddaten vor einer Objektklassifizierung zu verarbeiten. Unter der Verarbeitung der 3D-Bilddaten und der 2D-Bilddaten in dem Auswertungsmodul ist insbesondere zu verstehen, dass die 3D-Bilddaten und die 2D-Bilddaten miteinander fusioniert werden, um beispielsweise die 2D-Bilddaten zusätzlich mit Tiefeninformationen zu hinterlegen.

Aufgrund seiner Kompaktheit ist das erfindungsgemäße System somit auf einfache Weise, insbesondere in bestehende Systeme, zu installieren. Darüber hinaus kann es aufgrund der geringen Anzahl an notwendigen Komponenten besonders kostengünstig hergestellt werden.

Vorteilhafte Weiterbildungen der Erfindung sind in der Beschreibung, den Zeichnungen sowie den abhängigen Ansprüchen angegeben.

Gemäß einer ersten Ausführungsform sind die 3D-Bilddaten und die 2D-Bilddaten koregistriert. Insbesondere ist dies bereits bei der Erzeugung der jeweiligen Bilddaten der Fall, da die 3D-Bilddaten und die 2D-Bilddaten in demselben Bauteil, d.h. dem Kameramodul erzeugt werden. Koregistriert bedeutet dabei insbesondere, dass die 3D-Bilddaten und 2D-Bilddaten räumlich und zeitlich in Übereinstimmung gebracht sind, um eine präzise und konsistente Darstellung zu ermöglichen. Insbesondere ist keine aufwendige Synchronisierung der 3D-Bilddaten und 2D-Bilddaten, wie es beispielsweise bei Bilddaten von unterschiedlichen Kameramodulen der Fall ist, nötig.

Gemäß einer Ausführungsform beträgt ein überlagerter Sichtbereich des 3D-Bildsensors und der 2D-Kamera zumindest 50° oder zumindest 60°, vorzugsweise zumindest 75°. Der überlagerte Sichtbereich des 3D-Bildsensors und der 2D-Kamera kann aber auch schmaler sein, beispielsweise kann der überlagerte Sichtbereich zumindest 30° oder zumindest 40° betragen. Der Sichtbereich des 3D-Bildsensors und/oder der 2D-Kamera kann sich insbesondere in vertikale und/oder horizontale Richtung erstrecken. Der 3D-Bildsensor und die 2D-Kamera können somit einen breiten Sichtbereich erfassen. Vorteilhafterweise können somit mehrere Objekte gleichzeitig erfasst werden. Dies ermöglicht eine frühere Klassifizierung des jeweiligen Objekts, sodass genügend Zeit verbleibt, um nach einer entsprechenden Klassifizierung in Reaktion auf das ausgegebene Steuersignal eine dem Steuersignal zugehörige Aktion auszuführen. Ein weiterer Vorteil besteht darin, dass aufgrund des großen Sichtbereichs das Kameramodul ohne große Genauigkeitsanforderungen einfach zu installieren ist, sodass insbesondere die Wahrscheinlichkeit für eine fehlerhafte Installation oder Ausrichtung des Kameramoduls reduziert wird. Der große Sichtbereich erlaubt außerdem eine Erfassung und Klassifizierung von mehreren Objekten in dem Sichtbereich der Kamera, insbesondere gleichzeitig.

Gemäß einer Ausführungsform weisen der 3D-Bildsensor und die 2D-Kamera im Wesentlichen denselben Sichtbereich, einen überlappenden Sichtbereich oder aneinander angrenzende Sichtbereiche auf. Der vorstehend genannte Überwachungsbereich kann jeweils ein Teilbereich des Sichtbereichs sein. Der Sichtbereich bzw. das Sichtfeld bezeichnet den Bereich, welcher in den Bilddaten abgebildet werden kann. Bevorzugt sind beispielsweise zumindest 90 % des Raumwinkels des Sichtbereichs von 3D-Sensor und 2D-Kamera identisch. Bevorzugt sind die Sichtachsen, d.h. die Ausrichtung, des 3D-Bildsensors und der 2D-Kamera parallel.

Beispielsweise kann die 2D-Kamera mit einem 16:9-Verhältnis in einem speziellen 1:1 Modus betrieben werden, damit dessen Sichtfeld mit dem, insbesondere quadratischen, Sichtfeld des 3D-Bildsensors im Wesentlichen übereinstimmt. Vorzugsweise werden nur die Pixel der 2D-Kamera angesteuert und ausgelesen, welche dem Sichtfeld des 3D-Bildsensors entsprechen. Hierdurch kann die Zeilenverzögerung und/oder die erzeugte Datenmenge und somit die Bildaufnahmezeit verringert werden. Selbst bei der Verwendung von Rolling Shutter Verfahren können damit kürzere Bildaufnahmezeiten und damit weniger Bewegungsunschärfe erreicht werden.

Gemäß einer Ausführungsform umfasst die 2D-Kamera eine Recheneinheit, welche ausgebildet ist, Bildaufnahmeparameter der 2D-Kamera dynamisch, insbesondere automatisch, anzupassen. Die Recheneinheit ist beispielsweise ein intelligenter Chip, z.B. ein ISP. Mit anderen Worten verfügt die 2D-Kamera über automatische Anpassungsfunktionen wie z.B. Auto Gain, Auto White Balance, Auto Exposure und dergleichen. Die automatische Anpassung kann insbesondere innerhalb von für die jeweilige Anwendung vorgegebenen Grenzen erfolgen. Beispielsweise kann eine Maximaldauer für die Belichtungszeit vorgegeben sein, um Bewegungsunschärfe zu verhindern oder zumindest zu reduzieren.

Gemäß einer Ausführungsform ist das Kameramodul und das Auswertungsmodul über ausschließlich ein Verbindungskabel miteinander verbunden. In diesem Fall wird also nur ein einziges Verbindungskabel zum elektrischen Anschluss (also für die Datenverbindung und die Energieversorgung) des Kameramoduls an das Auswertungsmodul benötigt, was das Anschließen des Kameramoduls an das Auswertungsmodul deutlich vereinfacht. Insbesondere in schwer zugänglichen Bereichen kann der Anschluss des Kameramoduls dadurch deutlich vereinfacht werden.

Über das nur eine Verbindungskabel kann sowohl die Energieversorgung des Kameramoduls als auch die Übertragung der Bilddaten. Um eine derartige Kombination der Übertragung über das Verbindungskabel zu ermöglichen, kann das Kameramodul energiesparend ausgebildet sein und die Verarbeitung der Bilddaten in das Auswertungsmodul verlagert sein. Durch die Verlagerung von Funktionalität in das Auswertungsmodul ergibt sich nicht nur eine Energieeinsparung, sondern das Kameramodul kann auch kleiner und kompakter ausgebildet werden, was für die genannten industriellen Anwendungen ebenfalls vorteilhaft ist.

Bevorzugt erfolgt die Energieversorgung des Kameramoduls durch das Auswertungsmodul ausschließlich über das eine Verbindungskabel. Ebenfalls bevorzugt ausschließlich wird nur das eine Verbindungskabel genutzt, um die 2D-Bilddaten und die 3D-Bilddaten von dem Kameramodul an das Auswertungsmodul zu übertragen. Es ist zwar möglich, dass das Kameramodul und das Auswertungsmodul an einer gemeinsamen Struktur angebracht sind. Allerdings sind das Kameramodul und das Auswertungsmodul voneinander separat und bevorzugt an unterschiedlichen Orten an der gemeinsamen Struktur angebracht und die Kommunikation und Energieversorgung erfolgt, wie ausgeführt, insbesondere nur über das Verbindungskabel. Alternativ oder zusätzlich kann das Auswertungsmodul auch ortsfest angeordnet sein, wohingegen das Kameramodul seine Position verändern kann. Beispielsweise kann das Kameramodul zur Erfassung unterschiedlicher Perspektiven auf ein Objekt seine Position verändern. Vorzugsweise ist jedoch auch das Kameramodul ortsfest angeordnet.

Gemäß einer Ausführungsform ist das Verbindungskabel als Hochgeschwindigkeits-Serienschnittstelle, insbesondere als Gigabit Multimedia Serial Link (GMSL), ausgebildet. Somit können über das Verbindungskabel hohe Datenraten mit bis zu 3 Gbit/s, 6 Gbit/s oder 12 Gbit/s übertragen werden. Insbesondere kann das Auswertungsmodul zur Verarbeitung der großen Datenmengen geeignet sein. Das Verbindungskabel kann beispielsweise als insbesondere ausschließlich ein Koaxialkabel ausgebildet sein, über das insbesondere sowohl die Energieversorgung der Kamera als auch die bidirektionale Kommunikation laufen kann. Die Übertragung und/oder Verarbeitung der Daten erfolgt vorzugsweise in Echtzeit.

In einer Ausführungsform ist das Auswertungsmodul ausgebildet, über das Verbindungskabel Betriebsinformationen an das Kameramodul zu übertragen, wobei die Betriebsinformationen bevorzugt eine Konfiguration für das Kameramodul und/oder einen Trigger zum Auslösen von Bildaufnahmen enthalten. Es besteht bevorzugt also auch ein Rückkanal zwischen dem Auswertungsmodul und den Kameramodulen bzw. dem Kameramodul, über welchen das Auswertungsmodul Daten an das Kameramodul übertragen kann.

Bei der von dem Auswertungsmodul an das Kameramodul übertragen Konfiguration kann es sich beispielsweise um Einstellungen handeln, welche Bildgröße der 3D-Bildsensor und/oder die 2D-Kamera liefern sollen, auf welche Farbtiefe die 2D-Kamera einzustellen ist und/oder welche Scanfrequenz und/oder welcher Tiefenbereich von dem 3D-Bildsensor verwendet werden soll.

Durch den genannten Trigger kann zumindest eine der Kameras, d.h. entweder der 3D-Bildsensor oder die 2D-Kamera dazu veranlasst werden, Bilddaten aufzunehmen und an das Auswertungsmodul zu übertragen. Durch den Trigger kann das Auswertungsmodul also steuern, wann der 3D-Bildsensor und/oder die 2D-Kamera Bilddaten erzeugen.

In einer Ausführungsform ist das Kameramodul ausgebildet, das Triggersignal direkt einem von dem 3D-Bildsensor und der 2D-Kamera zuzuleiten und dem anderen von 3D-Bildsensor und 2D-Kamera das Triggersignal verzögert zuzuleiten. Wie beschrieben, veranlasst das Triggersignal die Bildaufnahme, d.h. letztendlich die Erzeugung der 3D-Bilddaten und/oder der 2D-Bilddaten. Das Triggersignal kann von dem Auswertungsmodul stammen, sodass die Bilderzeugung beispielsweise an externe Ereignisse geknüpft werden kann. Insbesondere kann das Triggersignal in regelmäßigen, insbesondere gleichbleibenden, Abständen erzeugt werden. Die Erzeugung des Triggersignals ist dabei grundsätzlich auch durch das Kameramodul möglich.

Beispielsweise kann der 3D-Bildsensor das Triggersignal direkt oder unverzögert erhalten und somit ohne Verzögerung die Erzeugung von 3D-Bilddaten starten. Erst verzögert, insbesondere um einen vorbestimmten Verzögerungszeitraum, kann dann die 2D-Kamera die Erzeugung der 2D-Bilddaten beginnen. Durch die Verzögerung kann die Datenübertragung über das Verbindungskabel verbessert werden, wie nachfolgend noch ausgeführt.

Alternativ ist es auch möglich, dass der 3D-Bildsensor und die 2D-Kamera das Triggersignal gleichzeitig erhalten, wodurch dann eine gleichzeitige Bildaufnahme erfolgt und gleichzeitig mit der Erzeugung der 3D-Bilddaten und der 2D-Bilddaten begonnen wird.

In einer Ausführungsform ist in dem Kameramodul eine Verzögerungseinheit vorgesehen, welche das Triggersignal für den 3D-Bildsensor oder die 2D-Kamera verzögert. Dabei ist die von der Verzögerungseinheit hervorgerufene Verzögerung des Triggersignals derart gewählt, dass die unverzögert erzeugten Bilddaten bereits zumindest zum Teil (oder vollständig) über das Verbindungskabel an das Auswertungsmodul übertragen wurden. Dies bedeutet, dass beispielsweise die 3D-Bilddaten des 3D-Bildsensors ohne Verzögerung direkt erzeugt werden und auch direkt über das Verbindungskabel an das Auswertungsmodul übertragen werden. Erst wenn die 3D-Bilddaten zumindest zum Teil oder vollständig übertragen wurden, erhält die 2D-Kamera das Triggersignal und beginnt mit der

Erzeugung der 2D-Bilddaten. Hierbei ergibt sich der Vorteil, dass z.B. bei bereits vollständiger Übertragung der 3D-Bilddaten die Übertragungskapazität des Verbindungskabels vollständig für die 2D-Bilddaten genutzt werden können. Die Übertragung über das Verbindungskabel wird damit vereinfacht. Auch ergibt sich der Vorteil, dass in dem Kameramodul z.B. für die üblicherweise sehr große Datenmenge der 2D-Bilddaten kein Zwischenspeicher (bzw. nur ein kleinerer Zwischenspeicher) vorgehalten werden muss, wodurch das Kameramodul wiederum kleiner kompakter und energiesparender ausgebildet werden kann.

Es versteht sich, dass auch die 2D-Kamera das Triggersignal unverzögert erhalten kann, wohingegen der 3D-Bildsensor dann das Triggersignal verzögert erhält. In diesem Fall werden dann bevorzugt zunächst die 2D-Bilddaten und erst danach die 3D-Bilddaten über das Verbindungskabel übertragen.

Insbesondere kann die Verzögerung, welche durch die Verzögerungseinheit erzeugt wird, auf einen festen bzw. konstanten Wert eingestellt sein. Dies ist insbesondere möglich, wenn die Datenraten und die Größe der Bilddaten, die von dem 3D-Bildsensor und der 2D-Kamera erzeugt werden, bekannt sind. Ebenfalls kann die Datenrate bekannt sein, mit der die Übertragung über das Verbindungskabel möglich ist, hierin auch maximale Übertragungsdatenrate genannt.

Alternativ ist es auch möglich, aus der aktuellen Konfiguration des Kameramoduls die jeweiligen Datenraten und/oder die Größe der Bilddaten zu ermitteln und den Verzögerungszeitraum im Betrieb zu berechnen.

Weiter alternativ oder zusätzlich ist es auch möglich, dass die Verzögerungseinheit ermitteln kann, ob Bilddaten über das Verbindungskabel gesendet werden und/oder welche Bilddaten über das Verbindungskabel gesendet werden. Die Verzögerungseinheit kann dann ausgebildet sein, beispielsweise nach einer vorbestimmten Größe der Bilddaten und/oder nach dem Ende der Bilddaten das Triggersignal weiterzuleiten (an diejenige Kamera, die noch keine Bilddaten erzeugt hat).

In einer Ausführungsform ist in den Kameramodulen ein Serializer und/oder in dem Auswertungsmodul ein Deserializer vorgesehen, wobei der Serializer über jeweils eine Datenverbindung mit dem 3D-Bildsensor und/oder der 2D-Kamera verbunden ist, wobei der Serializer die 3D-Bilddaten und/oder die 2D-Bilddaten in einen seriellen Datenstrom integriert, d.h. beispielsweise umwandelt, und über das Verbindungskabel überträgt.

Insbesondere empfängt der Deserializer den seriellen Datenstrom über das Verbindungskabel und extrahiert aus dem seriellen Datenstrom die 3D-Bilddaten und/oder die 2D-Bilddaten. Anders ausgedrückt, rekonstruiert der Deserializer die 3D-Bilddaten und/oder die 2D-Bilddaten aus dem seriellen Datenstrom.

Insbesondere können der Serializer, der Deserializer und das Verbindungskabel ein GMSL-System (Gigabit Multimedia Serial Link-System) bilden bzw. auf einem solchen System aufbauen.

Die vorstehend erläuterte Verzögerung des Triggersignals kann insbesondere dazu führen, dass die 3D-Bilddaten und die 2D-Bilddaten nacheinander am Serializer ankommen, sodass am Serializer bevorzugt kein Datenstau entsteht, sodass ein maximaler Durchsatz über das Verbindungskabel erzielt werden kann. Überdies kann sichergestellt werden, dass keine Bilddaten verloren gehen.

Weiterhin kann durch die absichtliche Verzögerung sichergestellt werden, dass die Bilddaten (also jedes Bild) einen eindeutigen und korrekten Zeitstempel aufweisen. Dies kann die korrekte Verarbeitung der Bilddaten in dem Auswertungsmodul erleichtern. Überdies kann durch die Verzögerung sichergestellt werden, dass zu keinem Zeitpunkt die maximale Bandbreite bzw. Übertragungsrate des Verbindungskabels überschritten wird.

In einer Ausführungsform sind der Serializer und/oder der Deserializer ausgebildet, die 3D-Bilddaten und die 2D-Bilddaten in separaten virtuellen Kanälen über das Verbindungskabel zu übertragen. Hierdurch kann sich eine vereinfachte Handhabung ergeben, welche insbesondere in einem vereinfachten Integrieren und Extrahieren der Bilddaten in/aus dem seriellen Datenstrom besteht. Der Serializer und/oder der Deserializer können ein entsprechendes Protokoll zur Verfügung stellen, welches die virtuellen Kanäle ermöglicht.

In einer Ausführungsform ist der 3D-Bildsensor ausgebildet, die 3D-Bilddaten mit einer ersten maximalen Datenrate zu erzeugen und die 2D-Kamera ist ausgebildet, die 2D-Bilddaten mit einer zweiten maximalen Datenrate zu erzeugen. Überdies ist eine Datenübertragung über das Verbindungskabel mit einer maximalen Übertragungsdatenrate möglich. Insbesondere ist die erste Datenrate und/oder die zweite Datenrate einzeln größer als die maximale Übertragungsdatenrate. Alternativ oder zusätzlich sind die erste und zweite maximale Datenrate zusammengenommen größer als die maximale Übertragungsdatenrate.

Unter der maximalen Datenrate ist zu verstehen, welche Datenrate der 3D-Bildsensor oder die 2D-Kamera maximal erreichen können, beispielsweise bei maximaler Auflösung, maximaler Scanrate, maximaler Farbtiefe, maximalem Abtastbereich, etc. Die maximale Datenrate kann höher sein als die maximale Übertragungsdatenrate. Es können also, zumindest zeitweilig, mehr Daten von dem 3D-Bildsensor oder der 2D-Kamera erzeugt werden, als über das Verbindungskabel in einer Zeiteinheit übertragen werden können.

Sofern die erste und die zweite maximale Datenrate nur zusammengenommen größer als die maximale Übertragungsdatenrate ist, kann schon die vorgenannte Verzögerung ausreichen, die zu einer Übertragung nacheinander führt, um die maximale Übertragungsdatenrate nicht zu überschreiten. Falls auch die erste und/oder zweite maximale Datenrate alleine größer als die maximale Übertragungsdatenrate ist, so können noch zusätzliche Maßnahmen getroffen werden, wie nachfolgend ausgeführt.

In einer Ausführungsform ist die 2D-Kamera ausgebildet, Bilddaten lediglich für einen Teil ihres Sichtfelds zu erzeugen. Die 2D-Kamera kann also ausgebildet sein ein sogenanntes "Cropping" durchzuführen. Bevorzugt unterstützt die 2D-Kamera das Cropping nativ, d.h. es wird beispielsweise lediglich ein Teil ihres Bildsensors ausgelesen. Durch ein derartiges Cropping bereits auf der Ebene des Bildsensors kann eine Energieeinsparung erfolgen, da keine unnötigen Daten erzeugt werden. Überdies kann eine Einsparung an Übertragungsbandbreite erfolgen. Weiterhin ist es möglich, nacheinander verschiedene Teile des Bildsensors auszulesen, d.h. in verschiedenen Bildern verschiedene Bildbereiche darzustellen. Es kann beispielsweise nach einem jeweiligen Triggersignal der auszulesende Bildbereich geändert werden, sodass das Auswertungsmodul dann in die Lage versetzt wird, aus den 2D-Bilddaten ein Gesamtbild des überwachten Bereichs zu rekonstruieren.

In einer Ausführungsform ist ein mit dem 3D-Sensor verbundener Pufferspeicher für 3D-Bilddaten in den Kameramodulen vorgesehen, wobei das Kameramodul ausgebildet ist, die 3D-Bilddaten mit einer höheren Datenrate in den Pufferspeicher zu schreiben, als der Pufferspeicher die 3D-Bilddaten an den Serializer und/oder an das Auswertungsmodul überträgt. Der 3D-Sensor liefert üblicherweise sehr viele Daten in sehr kurzer Zeit, sogenannte Bursts. Diese maximale Datenrate des 3D-Sensors kann die maximale Übertragungsdatenrate deutlich übersteigen. Über den Pufferspeicher kann die Datenrate dann gesenkt werden, die Übertragung der 3D-Bilddaten über das Verbindungskabel wird bevorzugt also zeitlich gestreckt.

Insbesondere kann der 3D-Bildsensor die 3D-Bilddaten über eine MIPI-Schnittstelle ausgeben, insbesondere an den Pufferspeicher. Vom Pufferspeicher kann dann eine verlangsamte Ausgabe der 3D-Bilddaten erfolgen.

Der Pufferspeicher kann insbesondere Teil eines Prozessors, beispielsweise eines Signalprozessors, insbesondere eines digitalen Signalprozessors, DSP, sein. Weiter insbesondere nimmt der Prozessor eine Veränderung an den 3D-Bilddaten vor, beispielsweise eine Komprimierung und/oder eine Extraktion der Tiefeninformation. Die Tiefeninformation kann dann die bisherigen 3D-Bilddaten zumindest teilweise oder vollständig ersetzen, wobei die derart geänderten und/oder ersetzten 3D-Bilddaten über das Verbindungskabel übertragen werden.

Beispielsweise umfasst der 3D-Bildsensor eine integrierte Verarbeitungseinrichtung, z.B. einen DSP, welcher aus 3D-Rohdaten (gemessene Phaseninformation des ausgesandten und nachfolgend zurückgestreuten Lichts) die Tiefeninformation berechnet. Die 3D-Rohdaten können (zunächst) die 3D-Bilddaten sein. Die Verarbeitungseinrichtung kann weiterhin ungültige Pixelinformationen anhand veränderbarer Kriterien ausfiltern, Preprocessing- (vor der Umwandlung in Tiefeninformation) und Postprocessing-Schritte durchführen, welche insbesondere durch das Auswertungsmodul parametrierbar sind. Die Verarbeitungseinrichtung kann den 3D-Bilddaten Statusinformationen über die Pixeldaten (z.B. Metadaten, Konfidenzdaten) hinzufügen.

Durch die Berechnung der Tiefendaten aus den 3D-Rohdaten kann die Datenmenge deutlich reduziert werden, beispielsweise um den Faktor 9. Dadurch kann die Übertragung der 3D-Bilddaten über das Verbindungskabel vereinfacht werden.

Die Ausführungen für den Pufferspeicher und/oder den Prozessor gelten entsprechend auch für die 2D-Bilddaten, welche durch einen entsprechenden Pufferspeicher ebenfalls verlangsamt ausgegeben werden können. In beiden Fällen kann die Größe des Pufferspeichers derart dimensioniert sein, dass der Pufferspeicher nie vollläuft.

Bevorzugt werden die 2D-Bilddaten aber unverändert und/oder insbesondere nicht durch einen zur Verzögerung vorgesehenen Pufferspeicher verzögert über das Verbindungskabel übertragen.

Bis auf die Komprimierung der 3D-Bilddaten kann in dem Kameramodul bevorzugt keine Veränderung der Bilddaten erfolgen, wodurch das Kameramodul wiederum kompakter und energiesparender ausgebildet werden kann. Bevorzugt findet gar keine Veränderung der Bilddaten in dem Kameramodul statt, welche Auswirkungen auf den Informationsgehalt der 3D- und/oder 2D-Bilddaten besitzen (die Umsetzung mittels des Serializers verändert den Informationsgehalt der Bilddaten nicht).

Insbesondere kann die Verzögerungseinrichtung beispielsweise auch in den Prozessor integriert sein, sodass der Prozessor auch die Verzögerung erzeugt.

In einer Ausführungsform besitzen die 3D-Bilddaten und die 2D-Bilddaten unterschiedliche Formate und/oder unterschiedliche Größe, wobei die 3D-Bilddaten und/oder die 2D-Bilddaten bevorzugt in einem Datenformat vorliegen, welches jeweils ganze Bytes belegt. Die Übertragung der unterschiedlichen Datenformate erzeugt eine zusätzliche Komplexität, welcher aber durch die vorgenannten Maßnahmen der virtuellen Kanäle und der nacheinander erfolgenden Übertragung Rechnung getragen wird. Durch die Verwendung von Datenformaten, welche jeweils ganze Bytes nutzen, beispielsweise RAW16 oder RAW8, kann die Bandbreite im Verbindungskabel voll ausgenutzt werden.

In einer Ausführungsform umfasst das Kameramodul einen Energiespeicher, insbesondere eine Kondensatorbank, welche ausgebildet ist, über das Verbindungskabel erhaltene elektrische Energie zu speichern und bei einem Energiebedarf des Kameramoduls, welcher die über das Verbindungskabel übertragene elektrische Leistung übersteigt, die gespeicherte elektrische Energie abzugeben, wobei der Energiespeicher bevorzugt eine Begrenzungsschaltung aufweist, welche eine Geschwindigkeit mit der der Energiespeicher aufgeladen wird, begrenzt.

Die Energieübertragung über das Verbindungskabel ist begrenzt, wobei das Kameramodul insbesondere während der Bildaufnahme mehr elektrische Leistung benötigen kann, als über das Verbindungskabel zur Verfügung gestellt werden kann. In einem solchen Fall kann die zusätzliche benötigte Energie dann kurzfristig aus dem Energiespeicher gezogen werden. Ist die Bildaufnahme abgeschlossen, so kann der Energiespeicher dann wieder aufgeladen werden, um während der nächsten Bildaufnahme dann elektrische Energie zur Verfügung stellen zu können.

Die Begrenzungsschaltung beugt einer Überlastung des Verbindungskabels vor. Die Begrenzungsschaltung kann ausgebildet sein, das Aufladen des Energiespeichers beispielsweise mit einem konstanten bzw. dauerhaft eingestellten Maximalwert eines Ladestroms zu ermöglichen. Alternativ oder zusätzlich kann die Begrenzungsschaltung eine Sensorik umfassen, die den momentanen Energieverbrauch des Kameramoduls mit der maximal möglichen von dem Verbindungskabel lieferbaren Energiemenge vergleicht und die Differenz zum Aufladen des Energiespeichers nutzt (der Ladestrom wird dann dementsprechend eingestellt). Auf diese Weise kann eine optimale Ausnutzung der Energieübertragung über das Verbindungskabels erzielt werden.

Bevorzugt ist das Kameramodul derart ausgelegt, dass der gemittelte Energieverbrauch des Kameramoduls kleiner als die maximal lieferbare Energiemenge über das Verbindungskabel ist. Der gemittelte Energieverbrauch kann beispielsweise über mehrere Minuten während eines regulären Betriebs des Systems ermittelt werden. Insbesondere beträgt der gemittelte Energieverbrauch zumindest 60 %, insbesondere zumindest 70 %, weiter insbesondere zumindest 80 %, der maximal über das Verbindungskabel lieferbaren Energiemenge. Andererseits beträgt der gemittelte Energieverbrauch aber maximal 80 %, insbesondere maximal 90 %, insbesondere maximal 95 % der maximal über das Verbindungskabel übertragbaren Energiemenge. Im Mittel darf der Energieverbrauch nicht die maximal über das Verbindungskabel lieferbare Energiemenge übersteigen, da sonst keine Energiereserven für das Aufladen des Energiespeichers mehr vorhanden sind.

Aus diesem Grund ist das Kameramodul möglichst energiesparend zu betreiben. Beispielsweise kann vorgesehen sein, dass die 2D-Kamera ein Pixelbinning vornimmt und/oder der 3D-Sensor eine Reduzierung der Sendeleistung für ein ausgesandtes optisches Signal (d.h. das Sendelicht) vornimmt, insbesondere wenn der Überwachungsbereich des 3D-Sensors verkleinert wird. Weitere energiesparende Maßnahmen sind natürlich ebenfalls möglich.

Zur Übertragung der elektrischen Energie über das Verbindungskabel kann in dem Kameramodul und/oder in dem Auswertungsmodul jeweils ein Trennfilter vorgesehen sein, um die über das Verbindungskabel übertragenen Daten, d.h. die Bilddaten, von einem Signal der Energieversorgung zu trennen. Beispielsweise können die Daten mittels eines Hochpassfilters ausgefiltert werden, wohingegen die Energieversorgung über einen Tiefpassfilter erfolgen kann.

In einer Ausführungsform ist das Verbindungskabel ein Koaxialkabel oder ein Kabel mit einer einzelnen geschirmten "Twisted Pair" Leitung. Das Koaxialkabel kann insbesondere bezüglich der Komponenten, welche elektrisch sowohl mit dem Kameramodul als auch mit dem Auswertungsmodul verbunden sind, lediglich eine Abschirmung und einen Mittelleiter aufweisen. In entsprechender Weise kann die Twisted Pair Leitung ebenfalls nur zwei Leiter und gegebenenfalls eine Abschirmung aufweisen. Für die Datenübertragung und/oder die Energieübertragung werden bevorzugt nur der Mittelleiter und die Schirmung bzw. nur die Twisted Pair Leitungen und dessen Schirmung verwendet, sonst werden keine zusätzlichen elektrischen Verbindungen verwendet.

Bevorzugt ist die Masse bzw. die Schirmung mit dem Gehäuse des Kameramoduls und/oder des Auswertungsmoduls direkt oder niederohmig verbunden. Die Masse bzw. die Schirmung kann dabei mit einem Schutzleiteranschluss (PE-Anschluss) verbunden sein. Auf diese Weise lässt sich die EMV-Verträglichkeit des Systems erhöhen.

Wie oben bereits angedeutet, sind das Kameramodul und das Auswertungsmodul separat voneinander angeordnet und bevorzugt in separaten Gehäusen ausgebildet. Das Verbindungskabel kann beispielsweise eine Mindestlänge von 0,5, 1 oder 2 m besitzen. Das Verbindungskabel kann beispielsweise eine maximale Länge von 15 m, 20 m oder 30 m aufweisen. Das Auswertungsmodul und das Kameramodul besitzen bevorzugt jeweils eine Steckmöglichkeit, beispielsweise an deren Gehäuse, für einen Steckverbinder des Verbindungskabels. Das Verbindungskabel kann also insbesondere zwei Steckverbinder aufweisen, einen für das Kameramodul und einen für das Auswertungsmodul. Die Steckverbinder können lösbar an den Steckmöglichkeiten angebracht sein.

In einer Ausführungsform ist der 3D-Bildsensor ein TOF-Sensor (Time of Flight Sensor) oder ein iTOF-Sensor (indirect Time of Flight Sensor), insbesondere ein Laserscanner oder ein LIDAR (Light Detection and Ranging). Der 3D-Bildsensor kann insbesondere eine Sendelichtquelle aufweisen, welche Sendelicht in einem Überwachungsbereich aussendet. In dem Überwachungsbereich kann das Sendelicht auf Objekte treffen, welche das Sendelicht in Richtung des 3D-Bildsensors remittieren, also zurückstrahlen. Von dem 3D-Bildsensor erfasstes zurückgestrahltes Sendelicht kann dann zur Auswertung der Lichtlaufzeit (direkt oder indirekt) verwendet werden, um den Abstand zum Objekt zu ermitteln. Das Sendelicht kann dabei in verschiedene Bereiche des Überwachungsbereichs ausgesandt werden, um so ein Tiefenbild des Überwachungsbereichs mit einer Vielzahl von Bildpunkten zu erzeugen.

In einer Ausführungsform ist die 2D-Kamera eine monochrome Kamera oder eine Farbkamera und weist bevorzugt zumindest eine Auflösung von 4 Megapixel, 8 Megapixeln oder 12 Megapixeln auf. Die 2D-Kamera kann insbesondere eine Optik mit einem dahinterliegenden Bildsensor aufweisen. Durch die Optik wird ein Bild des Überwachungsbereichs auf den Bildsensor projiziert. Der Bildsensor kann die genannte Auflösung von zumindest 4 Megapixeln, 8 Megapixeln oder 12 Megapixeln aufweisen und beispielsweise als CCD- oder CMOS-Sensor ausgebildet sein.

Gemäß einer Ausführungsform umfasst das System mehrere Kameramodule, die vorzugsweise über, insbesondere ausschließlich, ein (einziges) jeweiliges Verbindungskabel mit dem Auswertungsmodul verbunden sind. Vorzugsweise sind die Kameramodule an unterschiedlichen Positionen angeordnet, um verschiedene Perspektiven auf das Objekt bereitzustellen. Das Auswertungsmodul kann ausgebildet sein, die 3D-Bilddaten und die 2D-Bilddaten der jeweiligen Kameramodule zumindest teilweise zu vereinen bzw. zu fusionieren und basierend auf den vereinten Daten das erfasste Objekt zu klassifizieren. Basierend auf den 3D-Bilddaten und 2D-Bilddaten der jeweiligen Kameramodule kann somit ein multiperspektivisches Gesamtbild der Umgebung und/oder des Objekts erfasst werden und damit insbesondere ein präziseres bzw. vollständigeres Abbild der Realität geschaffen werden. Vorzugsweise werden 2, 3, 4 oder 5 Kameramodule verwendet.

Ferner ist es auch möglich, dass das Auswertungsmodul eine Klassifizierung nicht auf der Grundlage der vereinten Informationen durchführt, sondern basierend auf den 3D-Bilddaten und/oder den 2D-Bilddaten eines jeweiligen Kameramoduls eine jeweilige Klassifizierung durchführt. Das System ist in diesem Fall redundant ausgebildet, da separate Klassifizierungen für die Bilddaten der unterschiedlichen Kameramodule durchgeführt werden. Die Klassifizierung auf Basis der 3D-Bilddaten und/oder 2D-Bilddaten eines jeweiligen Kameramoduls kann ferner durch die Klassifizierung auf Basis der 3D-Bilddaten und/oder 2D-Bilddaten zumindest eines anderen Kameramoduls verifiziert werden. Eine Klassifizierung kann beispielsweise als valide gelten, wenn (zumindest mehr als) 50%, mehr als 60% oder mehr als 70% der verfügbaren Kameramodule dasselbe Klassifizierungsergebnis liefern.

Das System ist somit je nach Anwendung und Bedarf anpassbar und/oder erweiterbar, sodass eine flexible Nutzung möglich ist. Durch die Kombination von, insbesondere hochauflösenden, Multi-View-2D- und 3D-Bilddaten kann eine hohe Genauigkeit der Klassifizierung erreicht werden, da verschiedene Perspektiven detailliert erfasst werden können. Dies ermöglicht eine zuverlässige Detektion und/oder Klassifizierung der Objekte, da selbst kleine Objekte oder Anomalien präzise erkannt werden können. Insbesondere kann das Auswertungsmodul die gesammelten Bilddaten, d.h. die 2D- und/oder 3D-Bilddaten, der Kameramodule auf wesentliche Informationen zur Weiterverarbeitung, insbesondere zur Klassifizierung des Objekts, reduzieren.

Es ist auch möglich, dass das Auswertungsmodul als verteiltes Modul ausgebildet ist, sodass jedes der Kameramodule mit einem zugehörigen Teilmodul des Auswertungsmoduls verbunden ist. Eines der Teilmodule kann dann als zentrales Auswertungsmodul bzw. als Mastermodul fungieren, um die jeweiligen Daten der einzelnen Teilmodule zu vereinen, insbesondere zu synchronisieren.

In einer Ausführungsform ist das Auswertungsmodul ausgebildet, eine zeitliche Synchronisierung der jeweiligen 2D-Bilddaten und/oder der jeweiligen 3D-Bilddaten der Kameramodule durchzuführen. Das Auswertungsmodul kann somit als zentrale Steuer- und Auswerteeinheit ausgebildet sein. Insbesondere können die Aufnahmen der einzelnen Kameramodule, d.h. die 2D- und/oder 3D-Bilddaten zu einem jeweiligen Zeitpunkt, die für eine Klassifizierung des Objekts verwendet werden, aufeinander zeitlich abgestimmt sein, insbesondere denselben Zeitstempel aufweisen.

Gemäß einer Ausführungsform wird ein Trigger zur Erzeugung der 2D-Bilddaten und/oder ein Trigger zur Erzeugung der 3D-Bilddaten der jeweiligen Kameramodule in vorgegebenen zeitlichen Abständen initiiert. Der Trigger zur Erzeugung der 2D-Bilddaten ist beispielsweise ein Signal zum Auslösen der Bildaufnahme der 2D-Kamera. Der Trigger zur Erzeugung der 3D-Bilddaten ist beispielsweise das Aussenden eines Lichtimpulses oder eines Pulsmusters. Der Trigger kann insbesondere von dem Auswertungsmodul ausgelöst werden. Bei einer 3D-Bildaufnahme, d.h. bei der Erzeugung der 3D-Bilddaten, durch einen jeweiligen 3D-Bildsensor können sich die ausgesendeten Pulse und/oder Pulsmuster der Beleuchtung gegenseitig stören, z.B. durch Interferenzen zwischen den Kameramodulen bzw. den Bildsensoren der Kameramodule. Um eine derartige Störung zu verhindern, können die einzelnen Bildaufnahmen der unterschiedlichen Kameramodule zeitlich versetzt, insbesondere mit einer Verzögerung von 1% bis 5% der Belichtungszeit erfolgen. Bei einer Belichtungszeit von 10 ms kann die Verzögerung beispielsweise 0,1 ms bis 0,5 ms, vorzugsweise 0,3 ms, betragen. Die einzelnen Kameramodule können also zeitlich zumindest minimal desynchronisiert werden. Insbesondere können für die unterschiedlichen Kameramodule auch jeweils unterschiedliche Pulsmuster verwendet werden, wobei ein Pulsmuster beispielsweise eine Dauer von 10ms aufweisen kann. Es können aber auch Verzögerungen um 10 bis 20ms eingesetzt werden, d.h. die Verzögerungszeit kann grundsätzlich auch der Belichtungszeit entsprechen, solange die Verzögerungszeit kleiner als die durch die Bildwiederholrate (Frame Rate) definierte Zeit für die Erzeugung zweier aufeinanderfolgender Bilder ist. Bei einer Bildwiederholrate von 30Hz beträgt diese Zeit z.B. in etwa 33ms. Damit wird sichergestellt, dass die Bilder der einzelnen Kameras immer noch im Wesentlichen "gleichzeitig" sind, mit einer vordefinierten Toleranz, die durch die Verzögerung festgelegt wird, und somit ein Gesamt-3D-Schnappschuss basierend auf den fusionierten Daten erzeugt werden kann.

Gemäß einer Ausführungsform erfolgt die Klassifizierung des Objekts unter Verwendung eines KI-Modells. Das KI-Modell kann beispielsweise basierend auf 3D-Beispielbilddaten und/oder 2D-Beispielbilddaten trainiert werden oder trainiert worden sein. Die Beispielbilddaten enthalten beispielsweise von einem jeweiligen Kameramodul erfasste Bilddaten in 2D und/oder 3D, auf denen ein Objekt oder mehrere Objekte zur Klassifizierung dargestellt sind, wobei ein jeweiliges Objekt insbesondere einer aus den zu bestimmenden Zielklassen zugehörig ist. Die Zielklassen können insbesondere vorgegeben sein, es kann sich daher um gelabelte Daten handeln. Zusätzlich oder alternativ können die Beispielbilddaten auch von den Kameramodule fusionierte Daten umfassen, mit denen das KI-Modell trainiert wird. Das KI-Modell kann ferner mit Bilddaten trainiert werden, welchen unterschiedliche Beleuchtungen, insbesondere Beleuchtungsstärken, Belichtungszeiten und/oder unterschiedliches Umgebungslicht zugrunde liegen, sodass das KI-Modell weniger sensibel auf Lichtverhältnisse reagiert. Hierdurch wird das System besonders robust.

Bei dem KI-Modell kann es sich beispielsweise um ein künstliches neuronales Netz ("Neural Network"), insbesondere um ein gefaltetes künstliches neuronales Netz ("Convolutional Neural Network" - CNN) handeln. Das KI-Modell kann beispielsweise von dem Auswertungsmodul oder von einer mit dem Auswertungsmodul verbundenen externen Recheneinrichtung ausgeführt werden und die Klassifikation des Objekts vornehmen. Die für die Klassifikation zur Verfügung stehenden Zielklassen können, insbesondere jeweils, eine der oben genannten Eigenschaften des Objekts widerspiegeln. Bevorzugt können die Zielklassen die Eigenschaften wie verschiedene Größen, verschiedene Arten und/oder Formen, verschiedene Werte und/oder Zustände des Objekts angeben. Zusätzlich oder alternativ kann das Objekt von dem KI-Modell in, insbesondere nur, zwei Klassen klassifiziert werden, wobei eine Klasse einen Zustand angibt, der "in Ordnung" bzw. "förderbar" ist, und die andere Klasse einen Zustand angibt, der "nicht in Ordnung" bzw. "nicht förderbar" ist. Weitere mögliche Zielklassen und Eigenschaften der Zielklassen sind in der Figurenbeschreibung angegeben.

Ferner kann die Hardware und Software an die Verwendung von KI-Modellen angepasst und optimiert sein, insbesondere kann die Hardware zur Verarbeitung großer Rohdatenmengen ausgebildet sein. Die Hardware kann beispielsweise für die Verarbeitung von großen Rohdatenmenge der Kameramodule ausgebildet sein, insbesondere mit einer Verarbeitungsgeschwindigkeit von bis zu 40 Gbit/s. Hierzu kann die Hardware beispielsweise GPU-Beschleuniger-Chips oder für KI-Anwendungen optimierte Recheneinrichtungen umfassen. Hierdurch kann eine Klassifikation eines Objekts in Echtzeit ermöglicht werden, wobei die Klassifikation eines Objekts insbesondere weniger als 1 Sekunde, weniger als 0,5 Sekunden, vorzugsweise weniger als 0,1 Sekunden dauert.

Gemäß einer Ausführungsform erfolgt die Klassifizierung des Objekts unter Verwendung von 2D-Bilddaten und 3D-Bilddaten, welche zu einem ersten Zeitpunkt erzeugt wurden, und von 2D-Bilddaten und 3D-Bilddaten, welche zu zumindest einem anderen Zeitpunkt als den ersten Zeitpunkt erzeugt wurden. Mit anderen Worten erfolgt die Klassifizierung des Objekts unter Verwendung einer Vielzahl von zu unterschiedlichen Zeitpunkten erzeugten 2D-Bilddaten und 3D-Bilddaten. Bewegt sich das Objekt, beispielsweise auf einem Förderband, werden somit für die Klassifizierung des Objekts mehrere von einem Kameramodul erfasste Perspektiven auf das Objekt verwendet. Die zu den unterschiedlichen Zeitpunkten erzeugten 2D-Bilddaten und/oder 3D-Bilddaten können beispielsweise unterschiedlichen Positionen des Objekts im Raum zugeordnet werden. Das Objekt kann somit während einer Bewegung, beispielsweise entlang eines Förderbands, getrackt werden. Dies wird insbesondere durch das große Sichtfeld des Kameramoduls ermöglicht. Ferner kann jedes Kameramodul derart ausgebildet sein, 2D-Bilddaten und/oder 3D-Bilddaten zu unterschiedlichen aufeinanderfolgenden Zeitpunkten zu erzeugen, wobei die jeweiligen Zeitpunkte für alle Kameramodule vorzugsweise im Wesentlichen identisch sind. Somit kann für einen jeweiligen Zeitpunkt ein, insbesondere auf den gesamten Daten aller Kameramodule basierendes, Gesamtbild bzw. fusioniertes Bild erzeugt werden. Es werden somit insbesondere auch zu den unterschiedlichen Zeitpunkten mehrere Perspektiven auf das Objekt bereitgestellt. Der zeitliche Abstand zwischen den erzeugten Bilddaten kann insbesondere länger als 0,5s, länger als 1s oder länger als 2s sein. Ferner kann das Kameramodul eine FPS-Rate (frames per second) von mindestens 24 fps, mindestens 30 fps oder mindestens 60fps aufweisen, wobei die FPS-Rate vorzugsweise 30 fps beträgt. Ferner kann ein räumliches Tracking von Objekten durch das Bildfeld hinweg, insbesondere über alle zeitlich aufeinanderfolgenden einzelnen Frames, erfolgen. Mittels des räumlichen Trackings kann ferner eine Separation der Objekte auf dem Förderband erreicht werden, beispielsweise indem einem jeweiligen Objekt zugehörige Raumdaten ermittelt werden. Sobald das Objekt eine bestimmte Position erreicht hat, welche beispielsweise aufgrund des räumlichen Trackings erkannt wird, können ferner eine oder mehrere vordefinierte Funktionen ausgelöst werden. Beispielsweise kann im Falle eines Gepäckfördersystems, wenn das Gepäckstück die bestimmte Position erreicht hat, basierend auf dem Klassifikationsergebnis entschieden werden, ob das Gepäck aussortiert wird oder nicht. Mit Hilfe der aufeinanderfolgenden Bilder und beispielsweise unter Zuhilfenahme von visuellen Markern an dem Förderband und/oder an den Objekten kann außerdem eine Geschwindigkeit des Förderbands und/oder ein Förderbandstillstand erfasst werden.

Gemäß einer Ausführungsform ist das Auswertungsmodul ausgebildet, die eine von den 3D-Bilddaten oder 2D-Bilddaten zu verwenden, um die andere von den 3D-Bilddaten oder 2D-Bilddaten zu verifizieren. Die 3D-Informationen, insbesondere aus mehreren Perspektiven, ermöglicht eine genaue Bestimmung von Eigenschaften des Objekts, beispielsweise der Dimensionierung, insbesondere der Form und Orientierung, des Objekts. Somit können beispielsweise in den 2D-Bilddaten erfasste Eigenschaften eines Objekts, wie z.B. Schlaufen oder Griffe an einem Koffer, mit den 3D-Bilddaten verifiziert werden. D.h. die 3D-Bilddaten des einen oder der mehreren Kameramodule können gemeinsam genutzt werden, um die in den 2D-Bilddaten erkannten Eigenschaften zu verifizieren oder umgekehrt.

Ein weiterer Aspekt der Erfindung bezieht sich auf ein Verfahren zur Überprüfung von Objekten, welches umfasst, dass:
von zumindest einem Kameramodul mit einem, insbesondere lichtlaufzeitbasierten, 3D-Bildsensor zur Erzeugung von 3D-Bilddaten und einer 2D-Kamera zur Erzeugung von 2D-Bilddaten die 3D-Bilddaten und die 2D-Bilddaten an ein Auswertungsmodul übertragen werden, und
mittels des Auswertungsmodul basierend auf den 3D-Bilddaten und den 2D-Bilddaten ein durch das Kameramodul erfasstes Objekt klassifiziert wird.

Ein weiterer Aspekt der Erfindung bezieht sich auf ein Logistiksystem zur Überprüfung von Förderobjekten, umfassend:
ein System nach einem der vorstehenden Ausführungsformen und
eine Fördereinheit, insbesondere für Flughäfen, zum Transportieren der Förderobjekte.

Die Fördereinheit umfasst insbesondere eine Vorrichtung zum Bewegen des Objekts, beispielsweise einen Greifarm oder ein Transportfahrzeug, welches das Objekt transportiert. Bevorzugt umfasst die Fördereinheit ein Förderband. Auf dem Förderband werden beispielsweise Gepäckstücke transportiert, welche insbesondere klassifiziert werden müssen, um förderbare Gegenstände von nicht-förderbaren Gegenständen zu unterscheiden und gegebenenfalls die nicht-förderbaren Gegenstände auszusortieren. Das eine oder die mehreren Kameramodule sind insbesondere ortsfest angeordnet. Das Kameramodul kann das Förderobjekt während eines Transports auf der Fördereinheit erfassen. Insbesondere kann das System ausgebildet sein, das Förderobjekt ohne ein Stoppen der Fördereinheit zu erfassen und zu klassifizieren. Die Klassifikation kann dabei insbesondere in Echtzeit erfolgen. Folglich können Stillstandzeiten der Fördereinheit minimiert und damit die Effizienz des Logistiksystems gesteigert werden. In einer Ausführungsform kann das Logistiksystem aber auch ausgebildet sein, die Fördereinheit für eine Erfassung des Förderobjekts durch das Kameramodul, insbesondere kurzzeitig, zu stoppen, um bessere Bildaufnahmen zu ermöglichen. Hierdurch kann beispielsweise die Qualität der 3D-Bilddaten und/oder 2D-Bilddaten verbessert werden.

Gemäß einer Ausführungsform umfasst das Logistiksystem zumindest einen (optischen) Leser für maschinenlesbare Codes und/oder zumindest einen (funkbasierten) RFID-Leser (Radio Frequency Identification). Der Leser für maschinenlesbare Codes und/oder RFID-Leser sind insbesondere mit dem Auswertungsmodul verbunden. Die jeweiligen Leser sind insbesondere ausgebildet, eine entsprechende an dem Förderobjekt befindliche Kennzeichnungseinheit, z.B. einen Maschinencode, insbesondere einen Barcode und/oder QR-Code, oder einen RFID-Tag, zu lesen. Die Kennzeichnungseinheit umfasst beispielsweise Informationen zu der Art, Größe, einem Zielort und/oder anderen Eigenschaften des Objekts. Die Kombination von Leser für maschinenlesbare Codes und/oder RFID-Leser und Kameramodul ermöglicht eine besonders zuverlässige Klassifizierung eines Objekts. Ferner kann basierend auf dem Ausleseergebnis des Lesers für maschinenlesbare Codes und/oder des RFID-Lesers die Klassifikation eingeschränkt werden. Insbesondere kann das Logistiksystem ausgebildet sein, basierend auf dem Ausleseergebnis des Lesers für maschinenlesbare Codes und/oder des RFID-Lesers das Objekt in eine vorgegebene Anzahl von Zielklassen, insbesondere weniger als 4, weniger als 3, vorzugsweise 2 Zielklassen, zu klassifizieren. Beispielweise kann der Leser für maschinenlesbare Codes und/oder der RFID-Leser eine Art des Objekts ermitteln, z.B. ob es sich bei dem Objekt um einen Koffer, einen Rollstuhl usw. handelt, während in einem nächsten Schritt das System, insbesondere nur, einen Zustand des Objekts klassifiziert bzw. prüft. Zusätzlich oder alternativ kann Ausleseergebnis des Lesers für maschinenlesbare Codes und/oder des RFID-Lesers als Signal ausgegeben werden, um beispielsweise eine nach dem Logistiksystem nachfolgende (Gepäck-)Sortieranlage anzusteuern.

Bevorzugt können das Kameramodul (oder die Kameramodule) ortsfest derart angeordnet sein, dass die von der Fördereinheit bewegten Objekte erfasst werden können. Insbesondere können zur Befestigung des Kameramoduls oder der Kameramodule dieselben Halterungen verwendet werden, an welchen auch der Leser für maschinenlesbare Codes und/oder der RFID-Leser befestigt sind. Auf diese Weise wird kein zusätzlicher Bauraum oder gar ein zusätzliches Logistiksystem benötigt, um das Kameramodul einzusetzen.

Für das Verfahren gelten die Ausführungen zu dem erfindungsgemäßen System entsprechend, dies gilt insbesondere hinsichtlich Vorteilen und Ausführungsformen.

Es ist zu beachten, dass jede Kombination der vorstehenden Ausführungsformen möglich ist, solange dies nicht explizit ausgeschlossen wurde.

Nachfolgend wird die Erfindung rein beispielhaft unter Bezugnahme auf die Zeichnungen dargestellt. Es zeigen:
- Fig. 1: schematisch ein System zur Überprüfung von Objekten mit einem Kameramodul und einem Auswertungsmodul;
- Fig. 2: ein erweitertes System zur Überprüfung von Objekten mit 3 Kameramodulen, welche an dasselbe Auswertungsmodul angeschlossen sind;
- Fig. 3: 2D-Bildaufnahmen von von einem Kameramodul erfassten Objekten mit einer Segmentierung der jeweiligen Objekte;
- Fig. 4: ein Ablaufdiagramm zur Veranschaulichung des Bildverarbeitungsprozesses.

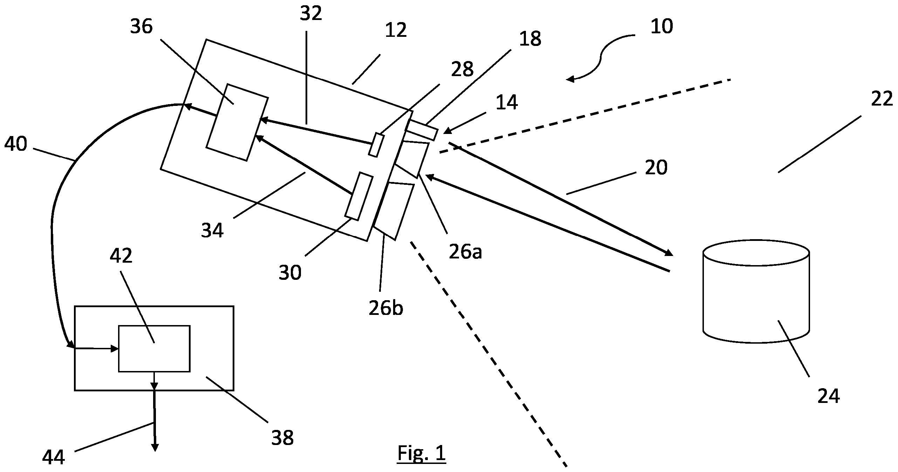

Figur 1 zeigt ein System 10 zur Überprüfung von Objekten 24 mit einem Kameramodul 12 (auch Sensorkopf genannt). Das Kameramodul 12 umfasst einen lichtlaufzeitbasierten 3D-Bildsensor 14 sowie eine 2D-Kamera 16.

Der 3D-Bildsensor 14 umfasst einen Lichtsender 18, welcher Sendelicht 20 in einen Überwachungsbereich 22 aussendet. Ein in dem Überwachungsbereich 22 angeordnetes Objekt 24 remittiert das Sendelicht 20, welches dann von dem 3D-Bildsensor mittels eines Objektivs 26a auf einen Bildsensor 28 geleitet wird. Die 2D-Kamera 16 umfasst ebenfalls ein Objektiv 26b sowie einen weiteren Bildsensor 30.

Der 3D-Bildsensor 14 und die 2D-Kamera 16 erzeugen auf diese Weise 3D-Bilddaten 32 und 2D-Bilddaten 34, welche an einen Serializer 36 übermittelt werden.

Das System 10 umfasst ferner ein Auswertungsmodul 38, welches mit dem Kameramodul 12 über ein einziges Verbindungskabel 40, insbesondere in Form eines Koaxialkabels, verbunden ist.

Der Serializer 36 ist mit dem Verbindungskabel 40 gekoppelt, um die 3D-Bilddaten 32 und die 2D-Bilddaten 34 über das Verbindungskabel 40 an das Auswertungsmodul 38 zu übertragen.

In dem Auswertungsmodul 38 ist ein Deserializer 42 vorgesehen, der aus den über das Verbindungskabel 40 übertragenen Daten die 3D-Bilddaten 32 und die 2D-Bilddaten 34 rekonstruiert. In dem Auswertungsmodul 38 findet zudem eine Verarbeitung der 3D-Bilddaten 32 und der 2D-Bilddaten 34 statt, wobei basierend auf den 3D-Bilddaten 32 und den 2D-Bilddaten 34 das durch das Kameramodul 12 erfasste Objekt 24 klassifiziert wird und das Klassifikationsergebnis 44 über eine (nicht gezeigte) Schnittstelle des Auswertungsmoduls 38 ausgegeben wird.

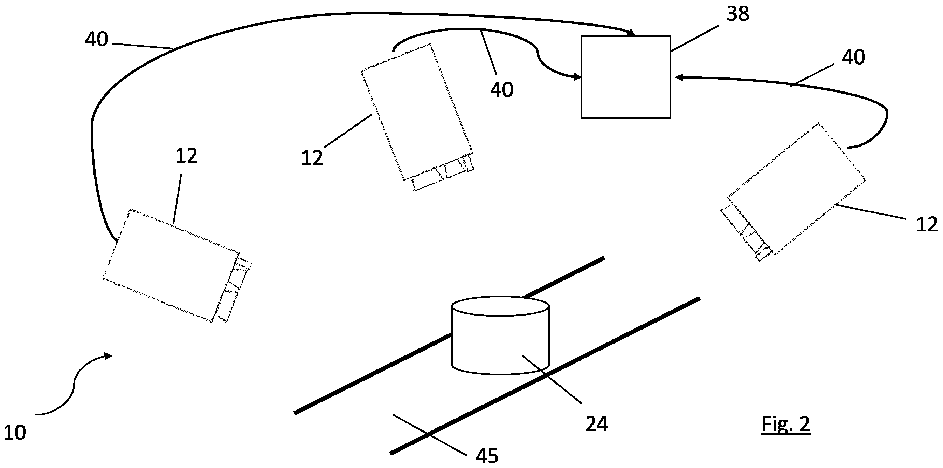

Fig. 2 zeigt ein erweitertes System 10 zur Überprüfung von Objekten 24 mit 3 Kameramodulen 12, welche über ein jeweiliges Verbindungskabel 40 an dasselbe Auswertungsmodul 38 angeschlossen sind. Die Kameramodule 12 können gemäß dem in Fig. 1 dargestellten Kameramodul 12 ausgebildet sein, wobei zur Vereinfachung einige der in Fig. 1 dargestellten Komponenten des Kameramoduls 12 in Fig. 2 nicht dargestellt sind. Die Kameramodule 12 sind an unterschiedlichen Positionen im Raum angeordnet, um verschiedene Perspektiven auf das Objekt 24 bereitzustellen, welches über ein Förderband 45 in eine Förderrichtung transportiert wird. Das Auswertungsmodul 38 empfängt die 3D-Bilddaten 32 und die 2D-Bilddaten 34 der jeweiligen Kameramodule 12 und vereint diese, um eine möglichst präzise Rekonstruktion der erfassten Umgebung, insbesondere des erfassten Objekts 24, bereitzustellen und basierend auf den vereinten 3D-Bilddaten und 2D-Bilddaten das erfasste Objekt 24 zu klassifizieren.

Durch die Kombination von multiperspektivischen 3D-Bilddaten 32 und 2D-Bilddaten 34 kann eine hohe Genauigkeit der Klassifizierung erreicht werden, da verschiedene Perspektiven detailliert erfasst werden können.

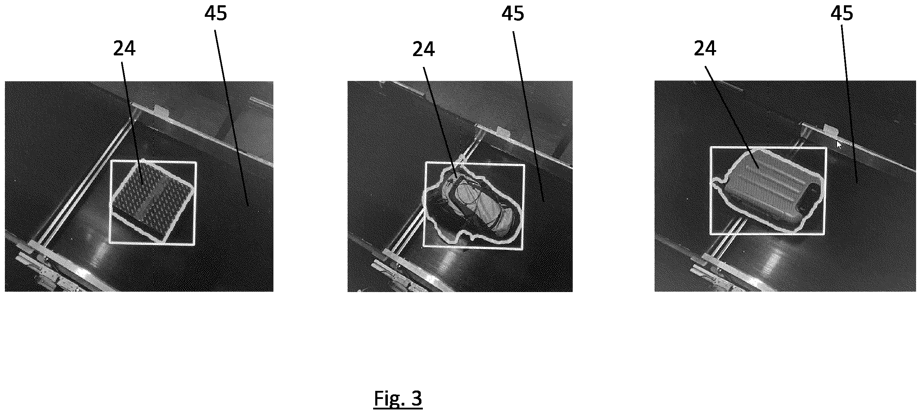

In Fig. 3 sind unterschiedliche 2D-Bildaufnahmen von von einem Kameramodul 12 erfassten Objekten 24 einschließlich einer Segmentierung (weiße Umrandung) der jeweiligen Objekte 24 dargestellt. Die Segmentierung kann beispielsweise durch das Auswertungsmodul 38 erfolgen. Hierfür können entsprechende Bildverarbeitungsverfahren zum Einsatz kommen. Vorliegend wurde die Segmentierung der Objekte 24 bzw. Bilder von einem in dem Auswertungsmodul 38 implementierten KI-Modell durchgeführt, das darauf trainiert wurde, aus den Bildaufnahmen des Kameramoduls 12, d.h. den erzeugten 3D-Bilddaten 32 und/oder 2D-Bilddaten 34, erfasste Objekte 24 zu segmentieren. In einem nächsten Schritt kann das segmentierte Objekt 24 dann einem weiteren KI-Modell zur Verfügung gestellt werden, welches eine Klassifizierung des Objekts 24 vornimmt.

Beispielsweise kann eine Klassifizierung in "nicht-förderbar" und "förderbar" erfolgen. Zusätzlich kann eine Klassifizierung in Unterklassen erfolgen, welche der nicht-förderbaren Klasse bzw. der förderbaren Klasse zugeordnet werden. Insbesondere können die Unterklassen Gegenstandstypen umfassen. Beispielsweise kann ein herkömmlicher Koffer als Teil der Unterklasse "Koffer" klassifiziert werden, wobei die Unterklasse "Koffer" der förderbaren Klasse zugeordnet wird. In entsprechender Weise kann dies für die Klasse "nicht-förderbar" erfolgen. Hier kann eine Unterklasse beispielsweise "lebende Tiere" umfassen.

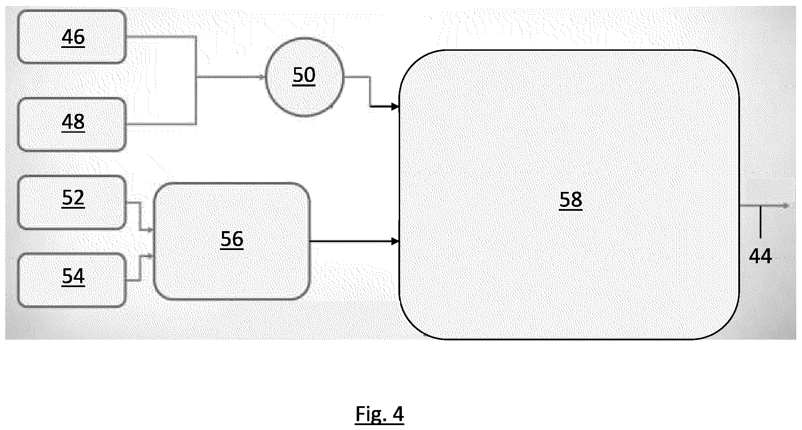

Fig. 4 zeigt ein Ablaufdiagramm zur Veranschaulichung des Bildverarbeitungsprozesses. Dabei werden 3D-Bilddaten 46 eines ersten Kameramoduls und 3D-Bilddaten 48 eines zweiten Kameramoduls zu fusionierten 3D-Bilddaten 50 zusammengeführt, welche anschließend einem oder mehreren KI-Modellen 58 zur Verfügung gestellt werden. Ferner werden die 2D-Bilddaten 52 des ersten Kameramoduls und die 2D-Bilddaten 54 des zweiten Kameramoduls dazu verwendet, um eine Segmentierung des Bildes vorzunehmen. Anschließend wird auch das segmentierte Bild bzw. die segmentierten 2D-Bilddaten 56 dem einen oder den mehreren Kl-Modellen 58 zur Verfügung gestellt. Unter Verwendung des KI-Modells 58 wird anschließend basierend auf den fusionierten 3D-Bilddaten 50 und den segmentierten 2D-Bilddaten 56 eine Klasse des Objekts 24 ermittelt.

### Bezugszeichenliste

- 10: System
- 12: Kameramodul
- 14: 3D-Bildsensor
- 16: 2D-Kamera
- 18: Lichtsender
- 20: Sendelicht
- 22: Überwachungsbereich
- 24: Objekt
- 26: Objektiv
- 28: Bildsensor
- 30: Bildsensor
- 32: 3D-Bilddaten
- 34: 2D-Bilddaten
- 36: Serializer
- 38: Auswertungsmodul
- 40: Verbindungskabel
- 42: Deserializer
- 44: Klassifikationsergebnis
- 45: Förderband
- 46: 3D-Bilddaten eines ersten Kameramoduls
- 48: 3D-Bilddaten eines zweiten Kameramoduls
- 50: fusionierte 3D-Bilddaten
- 52: 2D-Bilddaten des ersten Kameramoduls
- 54: 2D-Bilddaten des zweiten Kameramoduls
- 56: segmentierte 2D-Bilddaten
- 58: Kl-Modell

## Patentansprüche

1. System (10) zur Überprüfung von Objekten (24), insbesondere Förderobjekten, umfassend:
zumindest ein Kameramodul (12) zur Erfassung eines Objekts (24) und ein Auswertungsmodul (38), wobei das Kameramodul (12) einen, insbesondere lichtlaufzeitbasierten, 3D-Bildsensor (14) zur Erzeugung von 3D-Bilddaten (32) und eine 2D-Kamera (16) zur Erzeugung von 2D-Bilddaten (34) umfasst,
wobei das Kameramodul (12) ausgebildet ist, die 3D-Bilddaten (32) und die 2D-Bilddaten (34) an das Auswertungsmodul (38) zu übertragen,
wobei das Auswertungsmodul (38) ausgebildet ist, basierend auf den 3D-Bilddaten (32) und den 2D-Bilddaten (34) ein durch das Kameramodul (12) erfasstes Objekt (24) zu klassifizieren.

2. System (10) nach Anspruch 1,
wobei die 3D-Bilddaten (32) und die 2D-Bilddaten (34) koregistriert sind.

3. System (10) nach Anspruch 1 oder 2,
wobei ein überlagerter Sichtbereich des 3D-Bildsensors (14) und der 2D-Kamera (16) zumindest 50° oder zumindest 60°, vorzugsweise zumindest 75° beträgt.

4. System (10) nach einem der vorstehenden Ansprüche,
der 3D-Bildsensor (14) und die 2D-Kamera (16) im Wesentlichen denselben Sichtbereich, einen überlappenden Sichtbereich oder aneinander angrenzende Sichtbereiche auf.

5. System (10) nach einem der vorstehenden Ansprüche,
wobei die 2D-Kamera (16) eine Recheneinheit umfasst, welche ausgebildet ist, Bildaufnahmeparameter der 2D-Kamera (16) dynamisch, insbesondere automatisch, anzupassen.

6. System (10) nach einem der vorstehenden Ansprüche,
wobei das Kameramodul (12) und das Auswertungsmodul (38) über ausschließlich ein Verbindungskabel (40) miteinander verbunden sind.

7. System (10) nach Anspruch 6,
wobei das Verbindungskabel (40) als Hochgeschwindigkeits-Serienschnittstelle, insbesondere als Gigabit Multimedia Serial Link oder Flat Panel Display Link, ausgebildet ist.

8. System (10) nach einem der vorstehenden Ansprüche,
wobei das System (10) mehrere Kameramodule (12) umfasst, die vorzugsweise über, insbesondere ausschließlich, ein jeweiliges Verbindungskabel (40) mit dem Auswertungsmodul (38) verbunden sind.

9. System (10) nach Anspruch 8,
wobei ein Trigger zur Erzeugung der 2D-Bilddaten (34) und/oder ein Trigger zur Erzeugung der 3D-Bilddaten (32) der jeweiligen Kameramodule (12) in vorgegebenen zeitlichen Abständen initiiert wird.

10. System (10) nach einem der vorstehenden Ansprüche,
wobei die Klassifizierung des Objekts (24) unter Verwendung eines KI-Modells (58) erfolgt.

11. System (10) nach einem der vorstehenden Ansprüche,
wobei die Klassifizierung des Objekts (24) unter Verwendung von 2D-Bilddaten (34) und 3D-Bilddaten (32), welche zu einem ersten Zeitpunkt erzeugt wurden, und von 2D-Bilddaten (34) und 3D-Bilddaten (32), welche zu zumindest einem anderen Zeitpunkt als den ersten Zeitpunkt erzeugt wurden, erfolgt.

12. System (10) nach einem der vorstehenden Ansprüche,
wobei das Auswertungsmodul (38) ausgebildet ist, die eine von den 3D-Bilddaten (32) oder 2D-Bilddaten (34) zu verwenden, um die andere von den 3D-Bilddaten (32) oder 2D-Bilddaten (34) zu verifizieren.

13. Verfahren zur Überprüfung von Objekten (24), welches umfasst, dass:
von zumindest einem Kameramodul (12) mit einem, insbesondere lichtlaufzeitbasierten, 3D-Bildsensor (14) zur Erzeugung von 3D-Bilddaten (32) und
einer 2D-Kamera (16) zur Erzeugung von 2D-Bilddaten (34) die 3D-Bilddaten (32) und die 2D-Bilddaten (34) an ein Auswertungsmodul (38) übertragen werden, und
mittels des Auswertungsmodul (38) basierend auf den 3D-Bilddaten (32) und den 2D-Bilddaten (34) ein durch das Kameramodul (12) erfasstes Objekt (24) klassifiziert wird.

14. Logistiksystem zur Überprüfung von Förderobjekten, umfassend:
ein System nach einem der Ansprüche 1 bis 12 und
eine Fördereinheit, insbesondere für Flughäfen, zum Transportieren der Förderobjekte.

15. Logistiksystem nach Anspruch 14, ferner umfassend:
zumindest einen Leser für maschinenlesbare Codes und/oder zumindest einen RFID-Leser.

## Geänderte Patentansprüche

### Geänderte Patentansprüche gemäss Regel 137(2) EPÜ.

1. System (10) zur Überprüfung von Objekten (24), insbesondere Förderobjekten, umfassend:
zumindest ein Kameramodul (12) zur Erfassung eines Objekts (24) und ein Auswertungsmodul (38), wobei das Kameramodul (12) einen, insbesondere lichtlaufzeitbasierten, 3D-Bildsensor (14) zur Erzeugung von 3D-Bilddaten (32) und eine 2D-Kamera (16) zur Erzeugung von 2D-Bilddaten (34) umfasst, wobei das Kameramodul den 3D-Bildsensor (14) und die 2D-Kamera (16) in einem einzigen Bauteil vereint,
wobei das Kameramodul (12) ausgebildet ist, die 3D-Bilddaten (32) und die 2D-Bilddaten (34) an das Auswertungsmodul (38) zu übertragen,
wobei das Auswertungsmodul (38) ausgebildet ist, basierend auf den 3D-Bilddaten (32) und den 2D-Bilddaten (34) ein durch das Kameramodul (12) erfasstes Objekt (24) zu klassifizieren.

2. System (10) nach Anspruch 1,
wobei die 3D-Bilddaten (32) und die 2D-Bilddaten (34) koregistriert sind.

3. System (10) nach Anspruch 1 oder 2,
wobei ein überlagerter Sichtbereich des 3D-Bildsensors (14) und der 2D-Kamera (16) zumindest 50° oder zumindest 60°, vorzugsweise zumindest 75° beträgt.

4. System (10) nach einem der vorstehenden Ansprüche,
der 3D-Bildsensor (14) und die 2D-Kamera (16) im Wesentlichen denselben Sichtbereich, einen überlappenden Sichtbereich oder aneinander angrenzende Sichtbereiche auf.

5. System (10) nach einem der vorstehenden Ansprüche,
wobei die 2D-Kamera (16) eine Recheneinheit umfasst, welche ausgebildet ist, Bildaufnahmeparameter der 2D-Kamera (16) dynamisch, insbesondere automatisch, anzupassen.

6. System (10) nach einem der vorstehenden Ansprüche,
wobei das Kameramodul (12) und das Auswertungsmodul (38) über ausschließlich ein Verbindungskabel (40) miteinander verbunden sind.

7. System (10) nach Anspruch 6,
wobei das Verbindungskabel (40) als Hochgeschwindigkeits-Serienschnittstelle, insbesondere als Gigabit Multimedia Serial Link oder Flat Panel Display Link, ausgebildet ist.

8. System (10) nach einem der vorstehenden Ansprüche,
wobei das System (10) mehrere Kameramodule (12) umfasst, die vorzugsweise über, insbesondere ausschließlich, ein jeweiliges Verbindungskabel (40) mit dem Auswertungsmodul (38) verbunden sind.

9. System (10) nach Anspruch 8,
wobei ein Trigger zur Erzeugung der 2D-Bilddaten (34) und/oder ein Trigger zur Erzeugung der 3D-Bilddaten (32) der jeweiligen Kameramodule (12) in vorgegebenen zeitlichen Abständen initiiert wird.

10. System (10) nach einem der vorstehenden Ansprüche,
wobei die Klassifizierung des Objekts (24) unter Verwendung eines KI-Modells (58) erfolgt.

11. System (10) nach einem der vorstehenden Ansprüche,
wobei die Klassifizierung des Objekts (24) unter Verwendung von 2D-Bilddaten (34) und 3D-Bilddaten (32), welche zu einem ersten Zeitpunkt erzeugt wurden, und von 2D-Bilddaten (34) und 3D-Bilddaten (32), welche zu zumindest einem anderen Zeitpunkt als den ersten Zeitpunkt erzeugt wurden, erfolgt.

12. System (10) nach einem der vorstehenden Ansprüche,
wobei das Auswertungsmodul (38) ausgebildet ist, die eine von den 3D-Bilddaten (32) oder 2D-Bilddaten (34) zu verwenden, um die andere von den 3D-Bilddaten (32) oder 2D-Bilddaten (34) zu verifizieren.

13. Verfahren zur Überprüfung von Objekten (24), welches umfasst, dass:
von zumindest einem Kameramodul (12) mit einem, insbesondere lichtlaufzeitbasierten, 3D-Bildsensor (14) zur Erzeugung von 3D-Bilddaten (32) und einer 2D-Kamera (16) zur Erzeugung von 2D-Bilddaten (34) die 3D-Bilddaten (32) und die 2D-Bilddaten (34) an ein Auswertungsmodul (38) übertragen werden, wobei das Kameramodul den 3D-Bildsensor (14) und die 2D-Kamera (16) in einem einzigen Bauteil vereint, und
mittels des Auswertungsmodul (38) basierend auf den 3D-Bilddaten (32) und den 2D-Bilddaten (34) ein durch das Kameramodul (12) erfasstes Objekt (24) klassifiziert wird.

14. Logistiksystem zur Überprüfung von Förderobjekten, umfassend:
ein System nach einem der Ansprüche 1 bis 12 und
eine Fördereinheit, insbesondere für Flughäfen, zum Transportieren der Förderobjekte.

15. Logistiksystem nach Anspruch 14, ferner umfassend:
zumindest einen Leser für maschinenlesbare Codes und/oder zumindest einen RFID-Leser.
